(19) Europäisches Patentamt
European Patent Office
Office européen des brevets

(11) **EP 3 042 428 B1**

(12) **EUROPÄISCHE PATENTSCHRIFT**

(45) Veröffentlichungstag und Bekanntmachung des Hinweises auf die Patenterteilung:
**22.05.2019 Patentblatt 2019/21**

(21) Anmeldenummer: **14750734.7**

(22) Anmeldetag: **13.08.2014**

(51) Int Cl.:
*H02J 3/18* *(2006.01)*   *H02P 13/06* *(2006.01)*
*H02J 3/12* *(2006.01)*   *H02J 3/38* *(2006.01)*
*H02M 5/12* *(2006.01)*

(86) Internationale Anmeldenummer:
**PCT/EP2014/067330**

(87) Internationale Veröffentlichungsnummer:
**WO 2015/032598 (12.03.2015 Gazette 2015/10)**

(54) **VORRICHTUNG UND VERFAHREN ZUR STEUERUNG DER STABILITÄT EINES ORTSNETZES MIT EINEM REGELBAREN ORTSNETZTRANSFORMATOR**

DEVICE AND METHOD FOR CONTROLLING THE STABILITY OF A LOCAL NETWORK USING AN ADJUSTABLE LOCAL NETWORK TRANSFORMER

DISPOSITIF ET PROCÉDÉ PERMETTANT DE COMMANDER LA STABILITÉ D'UN RÉSEAU RÉGIONAL POURVU D'UN TRANSFORMATEUR DE RÉSEAU RÉGIONAL RÉGLABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.09.2013 DE 102013109611**

(43) Veröffentlichungstag der Anmeldung:
**13.07.2016 Patentblatt 2016/28**

(73) Patentinhaber: **Maschinenfabrik Reinhausen GmbH**
**93059 Regensburg (DE)**

(72) Erfinder:
• **BABIZKI, Alexei**
**93049 Regensburg (DE)**
• **FENG, Haijun**
**93128 Regenstauf (DE)**

(56) Entgegenhaltungen:
**EP-A1- 2 592 709**    **WO-A2-03/044611**
**DE-A1-102009 014 243**    **DE-A1-102012 202 273**

EP 3 042 428 B1

**Beschreibung**

Die vorliegende Erfindung betrifft eine Vorrichtung zur Steuerung der Stabilität eines Ortsnetzes mit einem regelbaren Ortsnetztransformator. Im Besonderen besitzt das Ortsnetz eine Vielzahl von Abgängen, wobei jeder Abgang mindestens einen Verbraucher und/oder mindestens eine dezentrale Energieerzeugungsanlage umfasst. Eine Sammelschiene, die die Vielzahl von Abgängen des Ortsnetzes miteinander verbindet, ist mit einem regelbaren Ortsnetztransformator verbunden, der ebenfalls mit der Sammelschiene über eine elektrische Leitung verbunden ist. Über die Sammelschiene ist eine Spannungsmessung für das Ortsnetz vorgesehen. Mit einem Laststufenschalter ist die Einstellung einer Ausgangsspannung des Ortsnetztransformators durchführbar.

Ferner betrifft die Erfindung ein Verfahren zur Steuerung der Stabilität eines Ortsnetzes mit einem regelbaren Ortsnetztransformator.

Die Richtung des Energieflusses ist bereits seit einiger Zeit ins Visier der Akteure geraten, da je nach der aktuellen Netzsituation, Wetterlage, momentanen Verbrauch sowie Dimensionierung der Einspeiser, der Energiefluss umdrehen kann. Dies führt unweigerlich zu Problemen bei der Spannungseinhaltung bzw. Verletzungen der Spannungsbänder, die gemäß der Norm EN 50160 eingehalten werden müssen. Diese neue Entwicklung muss von den zukünftigen Energiestrukturen beachtet und gegebenenfalls ausgeglichen werden. Die in der Vergangenheit ausgelegten Netze wurden jedoch nicht für einen bidirektionalen Energiefluss konzipiert.

Nach der neuen im Jahre 2012 in Kraft getretenen Richtlinie (VDE-AR-N 4105) soll die Blindleistung von PV-Umrichtern je nach Situation (eingespeiste Wirkleistung) bereitgestellt werden. Folglich spielt sowohl die kapazitive als auch die induktive Blindleistung eine immer wichtigere Rolle im Energienetz bei der Spannungseinhaltung. Bis jetzt wurde dieser Punkt in keinem Regelalgorithmus berücksichtigt.

Die heutigen Stromnetze sind in ihrer Funktionsweise auf den Lastfluss vom Kraftwerk zum Verbraucher dimensioniert. Das Qualitätsmanagement beim Netzbetreiber stellt in der Regel sicher, dass die Qualitätskriterien für die Spannungsqualität entsprechend DIN EN 50160 an allen Verbraucheranschlüssen des jeweiligen Netzes eingehalten werden.

Die deutsche Patentanmeldung DE 10 2010 018 996 A1 offenbart eine Vorrichtung und Verfahren zur Messung der Netzimpedanz eines elektrischen Versorgungsnetzes. Insbesondere bei einem Versorgungsnetz, bei dem kein Bezugsleiter vorhanden oder verfügbar ist. Durch Bereitstellung eines Anregungssignals auf unterschiedliche verkettete Phasen, kann ein entsprechendes Antwortsignal gemessen werden. Die Netzimpedanz berechnet sich aus den verschiedenen Anregungssignalen und den verschiedenen Antwortsignalen der unterschiedlichen verketteten Phasen.

Ein Verfahren zur adaptiven Regelung der Versorgungsspannung in Ortsnetzen, in welchen elektrische Energie, insbesondere in Form von Solar- und/oder Photovoltaikenergie einspeisbar und durch Verbraucher entnehmbar ist, ist der deutschen Patentanmeldung DE 10 2011 108 255 A1 zu entnehmen. Zur Regelung wird mindestens ein Trafo eingesetzt, der zwischen einem Mittelspannungs- und einem Niederspannungsnetz vorgesehen ist. Zur Durchführung der Regelung werden unterschiedliche Zustandsgrößen mindestens eines der Einspeiser/Verbraucher, wie z.B. Strom, Spannung, Verbrauch, Energiezufuhr, Energieverlust oder dergleichen, innerhalb des jeweiligen Ortsnetzes ermittelt. Diese Zustandsgrößen werden je Phase einem Regler, insbesondere einem multivariablen Regler, zugeleitet. Der jeweilige Regler gleicht diese Zustandsgrößen als Eingangswerte mit Soll-/Referenzwerten ab und generiert mindestens eine Stellgröße, die einem elektronisch geregelten Transformator zur Verfügung gestellt wird. Über den elektronisch geregelten Transformator wird dem jeweiligen Ortsnetz innerhalb vorgebbarer Stufen eine von der ermittelten Zustandsgröße abweichende geregelte Netzspannung eingestellt, die an einer vorgebbaren Stelle des Ortsnetzes messbar ist.

Die europäische Patentanmeldung EP 2 592 709 A1 offenbart ein Verfahren zur Steuerung der Stabilität eines Niederspannungsnetzes, wobei ein Niederspannungsnetz von einem Ortsnetztransformator mit elektrischem Strom gespeist wird. In dem Ortsnetztransformator wird die Mittelspannung auf Niederspannung transformiert. Das Niederspannungsnetz weist eine Hauptstromleitung auf, wobei von der Hauptstromleitung über eine Netzverzweigungsstelle elektrischer Strom in zumindest eine Zweigstromleitung geleitet wird, an welche Zweigstromleitung zumindest ein Stromverbraucher (Verbraucher) und/oder ein Stromerzeuger (Einspeiser) angeschlossen sind/ist. Die Zweigstromleitung mit dem daran angeschlossenen Verbraucher und/oder Einspeiser bildet einen autarken Netzbezirk. An der Netzverzweigungsstelle wird zumindest ein Sensor angeordnet, an welcher die Netzverzweigungsstelle die Zweigstromleitung von der Hauptstromleitung abzweigt. Mit dem Sensor werden der Stromfluss in der Zweigstromleitung und/oder die Spannung in der Zweigstromleitung gemessen. Eine Stromentnahme des Verbrauchers aus der Zweigstromleitung und/oder ein Energieeintrag des Einspeisers in die Zweigstromleitung und/oder eine Stromeinleitung von der Hauptstromleitung in die Zweigstromleitung und/oder die Einspeisung des elektrischen Stroms aus dem Ortsnetztransformator in das Niederspannungsnetz wird auf Basis des von dem Sensor festgestellten Stromflusses und/oder der von dem Sensor festgestellten Spannung mit der Maßgabe geregelt, dass eine Überlastung der Zweigstromleitung in dem Netzbezirk vermieden wird und/oder dass ein Spannungsband in dem Netzbezirk eingehalten wird.

Die internationale Patentanmeldung WO 2011/076887 offenbart ein Verfahren zur Leistungsregelung innerhalb eines mindestens einen elektrischen Speichers zumindest temporär aufweisenden Netzwerksegments eines Wechselspannungsnetzwerkes. Das Netzwerksegment ist über einen Transformator mit einer übergeordneten Netzwerkebene des Wechselspannungsnetzwerkes verbunden, die mit einer höheren Spannung betrieben wird als das Netzwerksegment. Eine Leistungseinspeisung des elektrischen Speichers in das Netzwerksegment und/oder eine Leistungsentnahme des elektrischen Speichers aus dem Netzwerksegment erfolgt in Abhängigkeit von einem Betriebsparameter des Netzwerksegments. Es ist vorgesehen, dass die Leistungseinspeisung auch in Abhängigkeit einer Spannungsdifferenz zwischen einer Einspeisespannung an einem Einspeisepunkt des elektrischen Speichers und einer Transformatorausgangsspannung an einem mit dem segmentseitigen Transformatorausgang verbundenen Kontakt erfolgt.

Dokument DE 10 2012 202273 A1 beschreibt eine Transformatoranordnung für die Ortsnetzspannungsversorgung. Diese Anordnung umfasst einen Transformator zur dreiphasigen Wandlung einer Mittelspannung, die mittels dreier Mittelspannungsanschlüsse aus der überregionalen Mittelspannungsversorgung geliefert wird, in eine Niederspannung zur Versorgung von Ortsnetzabschnitten eines Ortsnetzes. Der Transformator ist dazu eingangsseitig mit den Mittelspannungsanschlüssen und ausgangsseitig mit Sammelschienen zur Verteilung der Niederspannung verbunden. Von den Sammelschienen aus bestehen die üblichen Verbindungen zu den Ortsnetzabschnitten , die jeweils eine Reihe von privaten Haushalten umfassen. Ein Teil der Haushalte hat Photovoltaik-Anlagen und kann somit Strom erzeugen und zurückspeisen. Sowohl der Verbrauch von Energie auf Seiten der Haushalte als auch die Zurückspeisung verändert die Spannung in Teilen des jeweiligen Ortsnetzabschnitts. Am deutlichsten ist dabei die Veränderung normalerweise an dem Punkt des Ortsnetzabschnitts, der am weitesten von der Anordnung entfernt ist. Die Anordnung enthält eine Steuereinrichtung, ausgestaltet zur dreiphasigen Messung des Stroms in die Ortsnetzabschnitte und dazu mit den Sammelschienen verbunden. Die Steuereinrichtung misst die Spannung einer Phase an den Sammelschienen. Sowohl die Steuereinrichtung als auch die Spannungsmessvorrichtung sind in der Anordnung realisiert und angeordnet und greifen zur Messung auch nur auf dort vorhandene Anschlüsse und Leitungen zu. Es ist also keine Verbindung nach außen nötig oder vorgesehen.

Mit Hilfe von den gewonnenen Erkenntnissen aus den Simulationen werden die zur quantitativen Bewertung erforderlichen Informationen wie Spannungsschwankungen, Ströme und Verluste in den Leitungen sowie der Regelbedarf (Schaltintensität und Schaltanzahl) des Stufenschalters (On-Load Tap-Changer) im Jahr generiert. Diese Informationen bringen einen eindeutigen Mehrwert für die zukünftigen Regelstrategien, so kann beispielsweise die von den Energieversorgungsunternehmen vorgegebenen Grenzwerte deutlich effektiver eingehalten werden.

Es ist daher Aufgabe der Erfindung, eine Vorrichtung zu schaffen, mit der die Gesamtstabilität des Ortsnetzsystems innerhalb vorgegebener Grenzwerte deutlich effektiver, zuverlässiger und kostengünstiger einhaltbar ist.

Diese Aufgabe wird durch eine Vorrichtung zur Steuerung der Stabilität eines Ortsnetzes gelöst, die die Merkmale des Anspruchs 1 umfasst.

Es ist ferner Aufgabe der Erfindung, ein Verfahren zu schaffen, mit dem die Gesamtstabilität des Ortsnetzsystems innerhalb vorgegebener Grenzwerte deutlich effektiver, zuverlässiger und kostengünstiger eingehalten werden wird.

Diese Aufgabe wird durch ein Verfahren zur Steuerung der Stabilität eines Ortsnetzes gelöst, das die Merkmale des Anspruchs 6 umfasst.

Der Vorteil der erfindungsgemäßen Vorrichtung ist, dass eine Einrichtung zur Strommessung, die mit mindestens einem der Vielzahl von Abgängen verbunden ist und eine Einrichtung zur Spannungsmessung, die mit der Sammelschiene verbunden ist, mit einem Transformatorgehäuse des Ortsnetztransformators verbaut sind. Die Einrichtung zur Strommessung und die Einrichtung zur Spannungsmessung bilden bevorzugt eine bauliche Einheit. Von der Vielzahl von Abgängen sind nur kritische Abgänge mit der Einrichtung zur Strommessung verbunden. Für den Fall, dass sich die Anzahl der kritischen Abgänge im Laufe der Zeit ändert, muss die Einrichtung zur Strommessung neu konfiguriert werden. Dies kann an einer Stelle, nämlich im Transformatorgehäuse bzw. in der Ortsnetzstation, erfolgen. Ferner ist ebenfalls eine Überprüfungseinrichtung mit der Einrichtung zur Strommessung und der Einrichtung zur Spannungsmessung im Transformatorgehäuse verbaut. Mit der Überprüfungseinrichtung ist eine Einhaltung einer Bandobergrenze und einer Banduntergrenze der Spannung im Ortsnetz überprüfbar bzw. einstellbar. Die Einrichtung zur Strommessung, die Einrichtung zur Spannungsmessung und die Überprüfungseinrichtung bilden einen Spannungsregler, der zur Einstellung der Stufen des Ortsnetztransformators mit einem Laststufenschalter des Ortsnetztransformators verbunden ist.

Das erfindungsgemäße Verfahren zur Steuerung der Stabilität eines Ortsnetzes, zeichnet sich durch die folgenden Schritte aus:

- Bestimmung der kritischen Abgänge des Ortsnetzes;
- Ermittlung der äquivalenten Impedanz für jeden kritischen Abgang bei der minimalen Knotenspannung im auftauchendem Szenario;
- Ermittlung der äquivalenten Impedanz für jeden kritischen Abgang bei der maximalen Knotenspannung im auftauchendem Szenario;
- Berechnen des aktuellen komplexen Stroms, wobei das Berechnen für jeden der kritischen Abgänge des Ortsnetzes durchgeführt wird;

- Berechnen einer Prüfspannung;
- Überprüfen einer Bandobergrenze und einer Banduntergrenze in Abhängigkeit von einer Richtung einer Scheinleistung in einem Verbraucherzählpfeilsystem; und
- Verändern der Spannung im Ortsnetz, indem ein Laststufenschalter eine Stufenstellung an einem Ortsnetztransformator anpasst, damit die Spannung im Ortsnetz innerhalb der Bandobergrenze und der Banduntergrenze bleibt.

Ein Spannungswert wird an einem kritischen Knoten der kritischen Abgänge aus der Spannung an einer Sammelschiene und einer Spannungsanhebung oder einer Spannungsabsenkung ermittelt. Die Messung der Spannung an der Sammelschiene, sowie die Strommessung an jedem kritischen Abgang werden in einer Einrichtung zur Strommessung und in einer Einrichtung zur Spannungsmessung im Transformatorgehäuse vorgenommen.

Aus den Messdaten wird eine Scheinleistung des jeweils kritischen Abgangs berechnet. Die Messdaten werden an eine Überprüfungseinrichtung übergeben, mit der die Einhaltung der Bandobergrenze und der Banduntergrenze der Spannung überprüft wird. Bei einer Überschreitung der Bandobergrenze oder bei Unterschreitung der Banduntergrenze veranlasst die Überprüfungseinrichtung eine Einstellung der Stufen des Ortsnetztransformators.

Eine Einstufung der Abgänge als kritische Abgänge des Ortsnetzes können dadurch bezeichnet werden, wenn eine große Leistungseinspeisung bzw. -entnahme, eine Länge einer Leitung oder Kabel des jeweiligen Abgangs oder eine große Impedanz von Leitung oder Kabel im jeweiligen Abgang eine vordefinierte Schwelle überschreiten.

Nachfolgend sind die Erfindung und ihre Vorteile unter Bezugnahme auf die beigefügten Zeichnungen ausführlicher beschrieben. Es zeigen:

Fig. 1A    eine schematische Darstellung zur Analyse der Spannungssenkung ;

Fig. 1B    eine schematische Darstellung zur Analyse der Spannungsanhebung;

Fig. 2     eine graphische Darstellung der Beziehung zwischen Impedanz und Spannung von einer Bandobergrenze und einer Banduntergrenze;

Fig. 3     eine schematische Darstellung der Vorrichtung zur Steuerung der Stabilität eines Ortsnetzes;

Fig. 4     ein Ablaufdiagramm des Verfahrens zur Steuerung der Stabilität eines Ortsnetzes; und

Fig. 5     Überprüfung von $B_O$ und $B_U$ nach der aktuellen Scheinleistung (Verbraucherzählpfeilsystem).

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung und das erfindungsgemäße Verfahren ausgestaltet sein können.

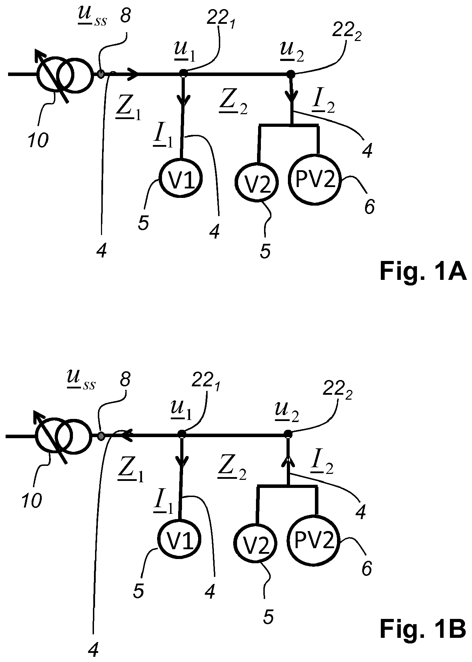

Figur 1A zeigt eine schematische Darstellung zur Analyse der Spannungssenkung und Figur 1B zeigt eine schematische Darstellung zur Analyse der Spannungsanhebung. Bei dem vorgeschlagenen Regelalgorithmus handelt es sich um ein Verfahren, das sowohl Blind- als auch Wirkleistung berücksichtigt. Dabei wird die äquivalente Netzimpedanz für Spannungsanhebung und -senkung differenziert und separat für die beiden theoretisch möglichen Fälle (siehe Fig. 1A bzw. 1B) ermittelt.

Bei dem in Fig. 1A und Fig. 1B gezeigten Beispiel hängt an der Sammelschiene 8 am ersten Knoten $22_1$ ein Verbraucher 5. Am zweiten Knoten $22_2$ hängt ebenfalls ein Verbraucher 5 und eine dezentrale Energieerzeugungsanlage 6. Die Sammelschiene 8 ist mit einem regelbaren Ortsnetztransformator 10 verbunden.

Anhand des Spannungssenkungsfalles (Fig. 1A) und des Spannungsanhebungsfalles (Fig. 1B) kann dieser Vorgang genauer erklärt werden. Mit Hilfe der Kirchhoffschen Gesetze und der zusätzlichen Informationen aus den betroffenen Knoten $22_1$ und $22_2$ kann die äquivalente Impedanz $\underline{Z}_{eq}^{min}$ im Fall der minimalen Spannungssenkung und die äquivalente Impedanz $\underline{Z}_{eq}^{max}$ im Fall der maximalen Spannungsanhebung ermittelt werden. Anhand der berechneten Netzimpedanz $\underline{Z}_{eq}^{min}$ oder $\underline{Z}_{eq}^{max}$ und des ermittelten komplexen Stromes am Abgang 4 wird die Spannungssenkung $\Delta \underline{u}$ bzw. die Spannungsanhebung $\Delta \underline{u}$ zwischen der Sammelschiene 8 und dem zweiten kritischen Knoten $22_2$ bestimmt. Ein Abgang 4 wird als kritisch bezeichnet, wenn eine große Leistungseinspeisung bzw. -entnahme vorliegt, lange Leitung oder Kabel den Abgang 4 bilden oder eine große Impedanz von Leitung oder Kabel im jeweiligen Abgang 4 vorliegt.

Die Spannungssenkung $\Delta \underline{u}$ bzw. die Spannungsanhebung $\Delta \underline{u}$ errechnet sich aus Gleichung (1):

$$\Delta \underline{u} = \underline{u}_{SS} - \underline{u}_2 \tag{1}$$

Wobei: $\underline{u}_{SS}$ den Messwert in der Transformatorstation darstellt.

Für die Spannungsabsenkung gelten die Gleichungen (2) und (3):

$$\Delta \underline{u} = \left(\underline{I}_1 + \underline{I}_2\right) \times \underline{Z}_{eq}^- = \left(\underline{I}_1 + \underline{I}_2\right) \times \underline{Z}_1 + \underline{I}_2 \times \underline{Z}_2 \tag{2}$$

und

$$\underline{Z}_{eq}^- = \underline{Z}_1 + \frac{\underline{I}_2}{\underline{I}_1 + \underline{I}_2} \times \underline{Z}_2$$
$$\left|\underline{Z}_{eq}^-\right| < \left|\underline{Z}_1 + \underline{Z}_2\right| \tag{3}$$

Für die Spannungsanhebung gelten die Gleichungen (4) und (5):

$$-\Delta \underline{u} = \left(\underline{I}_2 - \underline{I}_1\right) \times \underline{Z}_{eq}^+ = \left(\underline{I}_2 - \underline{I}_1\right) \times \underline{Z}_1 + \underline{I}_2 \times \underline{Z}_2 \tag{4}$$

und

$$\underline{Z}_{eq}^+ = \underline{Z}_1 + \frac{\underline{I}_2}{\underline{I}_2 - \underline{I}_1} \times \underline{Z}_2$$
$$\left|\underline{Z}_{eq}^+\right| > \left|\underline{Z}_1 + \underline{Z}_2\right| \tag{5}$$

Für die Spannungssenkung wird der Strom $\underline{I}_1 + \underline{I}_2$ am Abgang 4 aus P und Q ermittelt und ebenso wird $\underline{u}_{SS}$ in der Transformatorstation gemessen. Für eine normale Spannung $\underline{u}_2$ am zweiten Knoten $22_2$ gilt Gleichung (6).

$$\underline{u}_2 = \underline{u}_{SS} - \underline{Z}_{eq}^- \left(\underline{I}_1 + \underline{I}_2\right) \tag{6}$$

wobei gilt:

$$\underline{Z}_{eq}^- = \frac{\underline{u}_{SS} - \underline{u}_2}{\underline{I}_1 + \underline{I}_2}$$

Für eine minimale Spannung $\underline{u}_2^{min}$ gilt Gleichung (7)

$$\underline{u}_2^{\min} = \underline{u}_{SS} - \underline{Z}_{eq}^{\min}\left(\underline{I}_1 + \underline{I}_2\right) \tag{7}$$

wobei gilt:

$$\underline{Z}_{eq}^{\min} = \frac{\underline{u}_{SS} - \underline{u}_2^{\min}}{\underline{I}_1 + \underline{I}_2}$$

Somit ergibt sich für die meisten Situationen

$$\left|\underline{Z}_{eq}^{-}\right| < \left|\underline{Z}_{eq}^{\min}\right|$$

$$\left|\underline{u}_2^{\Pr üf}\right| = \left|\underline{u}_{SS} - \underline{Z}_{eq}^{\min} \times \left(\underline{I}_1 + \underline{I}_2\right)\right| < \left|\underline{u}_2\right|$$

Für die Spannungsanhebung wird der Strom $\underline{I}_2$ - $\underline{I}_1$ am Abgang 4 aus P und Q ermittelt und ebenso wird $\underline{u}_{SS}$ in der Transformatorstation gemessen. Für eine normale Spannung $\underline{u}_2$ am zweiten Knoten $22_2$ (Fig. 1B) gilt Gleichung (8).

$$\underline{u}_2 = \underline{u}_{SS} + \underline{Z}_{eq}^{+}\left(\underline{I}_2 - \underline{I}_1\right) \tag{8}$$

wobei gilt:

$$\underline{Z}_{eq}^{+} = \frac{\underline{u}_2 - \underline{u}_{SS}}{\underline{I}_2 - \underline{I}_1}$$

Für eine maximale Spannung $\underline{u}_2^{\max}$ am zweiten Knoten $22_2$ (Fig. 1B) gilt Gleichung (9)

$$\underline{u}_2^{\max} = \underline{u}_{SS} + \underline{Z}_{eq}^{\max}\left(\underline{I}_2 - \underline{I}_1\right) \tag{9}$$

wobei gilt:

$$\underline{Z}_{eq}^{\max} = \frac{\underline{u}_2^{\max} - \underline{u}_{SS}}{\underline{I}_2 - \underline{I}_1}$$

Somit ergibt sich für die meisten Situationen

$$\left|\underline{Z}_{eq}^{+}\right| < \left|\underline{Z}_{eq}^{\max}\right|$$

$$\left|u_{2+}^{\text{Pr}\ddot{u}f}\right| = \left|u_{SS} + \underline{Z}_{eq}^{\max} \times \left(\underline{I}_2 - \underline{I}_1\right)\right| > \left|u_2\right|$$

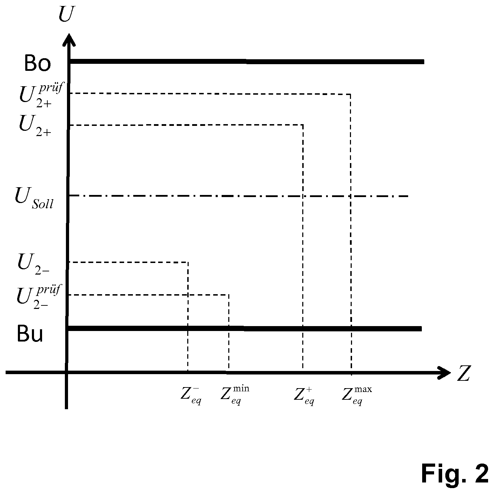

Figur 2 zeigt eine graphische Darstellung der Beziehung zwischen der Impedanz $Z$ und Spannung $U$ von einer Bandobergrenze $B_O$ und einer Banduntergrenze $B_U$. Bandobergrenze $B_O$ und die Banduntergrenze $B_U$ sind von einer Sollspannung $U_{Soll}$ abhängig. Beträgt z.B. die Sollspannung $U_{Soll}$ 400V, so weicht z.B. die Bandobergrenze $B_O$ um +2% und die Banduntergrenze $B_U$ um -2% von der Sollspannung $U_{Soll}$ ab. Wird die Bandobergrenze $B_O$ und die Banduntergrenze $B_U$ über- bzw. unterschritten, wird die Stufenstellung des Ortsnetztransformators 10 mit dem Laststufenschalter 14 entsprechend eingestellt, so dass ein Über- oder Unterschreiten der Bandobergrenze $B_O$ bzw. Banduntergrenze $B_U$ vermieden wird.

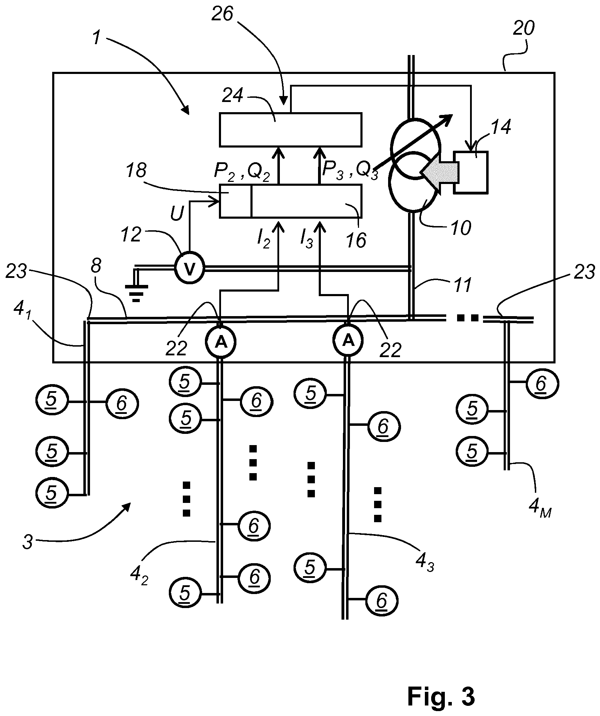

Figur 3 zeigt eine schematische Darstellung der Vorrichtung 1 zur Steuerung der Stabilität eines Ortsnetzes 3. Das Ortsnetz 3 hat eine Vielzahl von Abgängen $4_1, 4_2,..., 4_M$, wobei jeder Abgang $4_1, 4_2,..., 4_M$, mindestens einen Verbraucher 5 und/oder mindestens eine dezentrale Energieerzeugungsanlage 6 umfasst. Unter der dezentralen Energieerzeugungsanlage 6 kann eine Photovoltaikanlage, eine Biogasanlage etc. verstanden werden. Bei der in Figur 3 gezeigten Darstellung, sind im ersten Abgang $4_1$ drei Verbraucher 5, von denen ein Verbraucher 5 als dezentrale Energieerzeugungsanlage 6 eine Photovoltaikanlage auf dem Dach des Hauses hat. Der M-te Abgang $4_M$ hat zwei Verbraucher 5 und eine von den Verbrauchern 5 unabhängige dezentrale Energieerzeugungsanlage 6, die ebenfalls eine Photovoltaikanlage ist. Mit einer Sammelschiene 8 ist die Vielzahl der Abgänge $4_1, 4_2,..., 4_M$, miteinander verbunden bzw. vernetzt und an einen regelbaren Ortsnetztransformator 10 angeschlossen. Der Ortsnetztransformator 10 ist mit der Sammelschiene 8 über ein Kabel 11 verbunden. Eine Spannungsmessung für das Ortsnetz 3 ist vorgesehen und mit einem Laststufenschalter 14 zur Einstellung einer Ausgangsspannung des Ortsnetztransformators 10 verbunden. Der Ortsnetztransformator 10 ist in einem Transformatorgehäuse 20 untergebracht. Ebenso ist eine Einrichtung 16 zur Strommessung, die mit mindestens einem der Vielzahl der Abgänge $4_1, 4_2,..., 4_M$, verbunden ist und eine Einrichtung 18 zur Spannungsmessung, die mit der Sammelschiene 8 verbunden ist, im Transformatorgehäuse 20 verbaut.

Bei der in Figur 3 gezeigten Darstellung sind vier Abgänge $4_1, 4_2, 4_3$ und $4_M$ dargestellt. Hier sind der zweite Abgang $4_2$ und der dritte Abgang $4_3$, die vom Knoten 22 abgehen, als kritische Abgänge bezeichnet. Der erste Abgang $4_1$ und der vierte Abgang $4_M$, die vom Knoten 23 abgehen, wurden als nicht kritische Abgänge bewertet und werden somit bei der Steuerung der Stabilität des Ortsnetzes 3 nicht berücksichtigt. Mit der Einrichtung 16 zur Strommessung werden somit im Transformatorgehäuse 20 nur der Strom $\underline{I}_2$ des zweiten Abgangs $4_2$ und der Strom $\underline{I}_3$ des dritten Abgangs $4_3$ gemessen. Parallel dazu wird die an der Sammelschiene 8 anliegende Spannung von der Einrichtung 18 gemessen. Aus den Messdaten werden die Scheinleistungen $S_2$ und $S_3$ der Abgängen $4_2$ und $4_3$ berechnet, anschließend an eine Überprüfungseinrichtung 24 übergeben, mit der die Einhaltung der Bandobergrenze $B_O$ und der Banduntergrenze $B_U$ überprüft wird. Die Einrichtung 16 zur Strommessung, die Einrichtung 18 zur Spannungsmessung und die Überprüfungseinrichtung 24 bilden einen Spannungsregler 26 für die Einstellung der Stufen des Ortsnetztransformators 10.

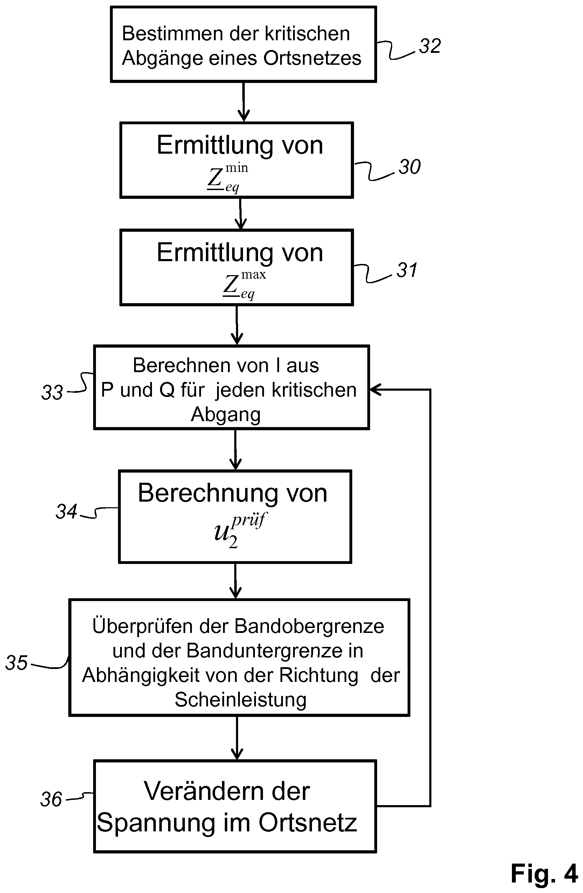

Figur 4 zeigt ein Ablaufdiagramm des erfindungsgemäßen Verfahrens zur Steuerung der Stabilität eines Ortsnetzes 3. Zunächst erfolgt die Bestimmung 32 der kritischen Abgänge des Ortsnetzes 3. Es folgt dann eine Ermittlung 30 der äquivalenten Impedanz $\underline{Z}_{eq}^{\min}$ für jeden kritischen Abgang bei der minimalen Knotenspannung und eine Ermittlung 31 der äquivalenten Impedanz $\underline{Z}_{eq}^{\max}$ für jeden kritischen Abgang bei der maximalen Knotenspannung. Die Ermittlung 30, 31 kann durch Simulation oder durch Messung an dem zu steuernden realen Ortsnetz 3 erfolgen. Ein Berechnen 33 in p.u. (siehe Gleichung 10) aus P und Q, wird für jeden der kritischen Abgänge des Ortsnetzes 3 durchgeführt (Verbraucherzählpfeilsystem).

$$\underline{I} = \frac{P - jQ}{u_{SS}} \tag{10}$$

Im Anschluss daran erfolgt ein Berechnen 34 von $u_2^{\text{Pr}\ddot{u}f}$, wobei für die Spannungssenkung

$$\left|u_{2-}^{\text{Pr}\ddot{u}f}\right| = \left|u_{SS} - \underline{Z}_{eq}^{\min} \times \underline{I}\right|$$

und für die Spannungsanhebung

$$\left|u_{2+}^{\text{Pr}\ddot{u}f}\right| = \left|u_{SS} - \underline{Z}_{eq}^{\max} \times \underline{I}\right|$$

gilt. Je nach Richtung der Scheinleistung erfolgt ein Überprüfen 35 der Bandobergrenze $B_O$ und der Banduntergrenze $B_U$. Wird die Bandobergrenze $B_O$ und die Banduntergrenze $B_U$ über- bzw. unterschritten wird ein Verändern 36 der Spannung im Ortsnetz 3 durchgeführt. Hierzu wird die Stufenstellung des Ortsnetztransformators 10 mit dem Laststufenschalter 14 entsprechend eingestellt, so dass ein Über- oder Unterschreiten der Bandobergrenze $B_O$ bzw. Banduntergrenze $B_U$ vermieden wird. Das Berechnen von / wird immer ausgeführt, um eine zeitnahe Anpassung der Spannung bzw. Steuerung der Stabilität des Ortsnetzes 3 zu erreichen.

Für den Fall, dass sich die Zahl der kritischen Abgänge in einem bestehenden Ortsnetz ändert, sind die Schritte 30 bis 31 erneut durchzuführen. Ebenso gilt es, die Vorrichtung 1 aus Figur 3 neu zu konfigurieren. Dies bedeutet, dass die Möglichkeit geschaffen werden muss, die vorher als nicht kritisch eingestufte Abgänge zu überwachen und zu vermessen. Bei diesen Verfahren werden Ströme bei allen im Voraus berechneten oder simulierten kritischen Abgängen im Transformatorgehäuse 20 bzw. der Ortsnetzstation gemessen. Hier werden jedoch keine teuren und nicht stabilen, abgesetzten Sensoren verwendet.

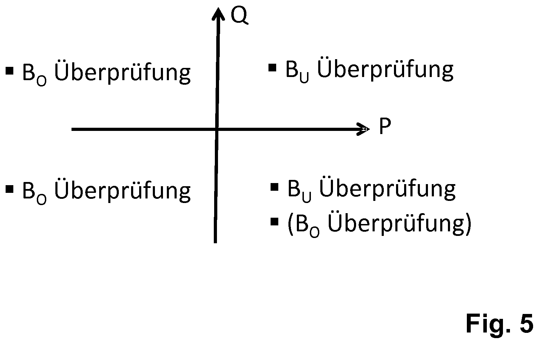

Figur 5 zeigt die Überprüfung (Verbraucherzählpfeilsystem 40) von $B_O$ und $B_U$ in vier Quadranten, die für die scheinleistungsabhängige Spannungsregelung verwendet wird.

## Bezugszeichenliste

| | |
|---|---|
| 1 | Vorrichtung |
| 3 | Ortsnetze |
| $4$ $4_1$, $4_2$, $4_M$ | Abgänge |
| 5 | Verbraucher |
| 6 | dezentrale Energieerzeugungsanlage |
| 8 | Sammelschiene |
| 10 | Ortsnetztransformator |
| 11 | Kabel |
| 12 | Spannungsmessung |
| 14 | Laststufenschalter |
| 16 | Einrichtung zur Strommessung |
| 18 | Einrichtung zur Spannungsmessung |
| 20 | Transformatorgehäuse |
| 22, $22_1$, $22_2$ | kritischer Knoten |
| 23 | nicht kritischer Knoten |
| 24 | Überprüfungseinrichtung |
| 26 | Spannungsregler |
| 30 | Ermittlung |
| 31 | Ermittlung |
| 32 | Bestimmung |
| 33 | Berechnen |
| 34 | Berechnen |
| 35 | Überprüfen |
| 36 | Verändern |
| 40 | Verbraucherzählpfeilsystem |
| $B_O$ | Bandobergrenze |
| $B_U$ | Banduntergrenze |
| I | Strom |
| P | induktive Leistung |
| Q | kapazitive Leistung |

## Patentansprüche

1. Vorrichtung (1) zur Steuerung der Stabilität eines Ortsnetzes (3), mit

- einer Vielzahl von Abgängen ($4_1$, $4_2$,..., $4_M$), wobei jeder Abgang ($4_1$, $4_2$,..., $4_M$) mindestens einen Verbraucher (5) und/oder mindestens eine dezentrale Energieerzeugungsanlage (6) umfasst;
- mit einer Sammelschiene (8), die die Vielzahl von Abgängen ($4_1$, $4_2$,..., $4_M$) miteinander verbindet;

- mit einem regelbaren Ortsnetztransformator (10), der ebenfalls mit der Sammelschiene (8) über eine elektrische Leitung (11) verbunden ist, mit der eine Spannungsmessung (12) für das Ortsnetz (3) vorgesehen ist; und
- mit einem Laststufenschalter (14) zur Einstellung einer Ausgangsspannung des Ortsnetztransformators (10);
- wobei eine Einrichtung (16) zur Strommessung, die mit mindestens einem der Vielzahl von Abgängen ($4_1$, $4_2$,..., $4_M$) verbunden ist und eine Einrichtung (18) zur Spannungsmessung, die mit der Sammelschiene (8) verbunden ist, mit einem Transformatorgehäuse (20) verbaut sind; **dadurch gekennzeichnet, dass**
- von der Vielzahl von Abgängen ($4_1$, $4_2$,..., $4_M$) nur kritische Abgänge zur Strommessung mit der Einrichtung (16) verbunden sind.

2.  Vorrichtung (1) nach dem vorigen Anspruch, wobei

    - ein Abgang ($4_1$, $4_2$,..., $4_M$) als kritischer Abgang eingestuft ist, wenn

       • eine Leistungseinspeisung im jeweiligen Abgang eine vordefinierte erste Schwelle überschreitet; oder
       • eine Leistungsentnahme im jeweiligen Abgang eine vordefinierte zweite Schwelle überschreitet; oder
       • eine Länge einer Leitung oder eines Kabels des jeweiligen Abgangs eine vordefinierte dritte Schwelle überschreitet; oder
       • eine Impedanz der Leitung oder des Kabels im jeweiligen Abgang eine vordefinierte dritte Schwelle überschreitet.

3.  Vorrichtung (1) nach einem der vorigen Ansprüche, wobei

    - eine Überprüfungseinrichtung (24) mit der Einrichtung (16) zur Strommessung und der Einrichtung (18) zur Spannungsmessung im Transformatorgehäuse (20) verbaut ist, über die eine Einhaltung einer Bandobergrenze ($B_O$) und einer Banduntergrenze ($B_U$) überprüfbar ist.

4.  Vorrichtung nach einem vorigen Ansprüche, wobei

    - die Einrichtung (16) zur Strommessung, die Einrichtung (18) zur Spannungsmessung und die Überprüfungseinrichtung (24) einen Spannungsregler (26) bilden, der zur Einstellung der Stufen des Ortsnetztransformators (10) mit dem Laststufenschalter (14) des Ortsnetztransformators (10) verbunden ist.

5.  Vorrichtung nach Anspruch 1 bis 4, wobei

    - der Laststufenschalter nach dem Reaktorschaltprinzip aufgebaut ist.

6.  Verfahren zur Steuerung der Stabilität eines Ortsnetzes (3), umfassend die Schritte

    - Bestimmung (32) der kritischen Abgänge ($4_1$, $4_2$,..., $4_M$) des Ortsnetzes (3);
    - Ermittlung (30) der äquivalenten Impedanz für jeden kritischen Abgang bei der minimalen Knotenspannung im zu steuernden und zu regelnden Ortsnetz (3);
    - Ermittlung (31) einer äquivalenten Impedanz für jeden kritischen Abgang bei der maximalen Knotenspannung im zu steuernden und zu regelnden Ortsnetz (3);
    - Berechnen des aktuellen Stroms für jeden der kritischen Abgänge ($4_1$, $4_2$, ..., $4_M$) des Ortsnetzes (3) wobei das Berechnen für jeden der kritischen Abgänge ($4_1$, $4_2$,..., $4_M$) des Ortsnetzes (3) durchgeführt wird;
    - Berechnen (34) einer Prüfspannung;
    - Überprüfen (35) einer Bandobergrenze ($B_O$) und einer Banduntergrenze ($B_U$) in Abhängigkeit von einer Richtung einer Scheinleistung in einem Verbraucherzählpfeilsystem (40); und
    - Verändern (36) der Spannung im Ortsnetz (3), indem ein Laststufenschalter (14) eine Stufenstellung an einem Ortsnetztransformator (10) anpasst, damit die Spannung im Ortsnetz (3) innerhalb der Bandobergrenze ($B_O$) und der Banduntergrenze ($B_U$) bleibt.

7.  Verfahren nach Anspruch 6, wobei

    - ein Spannungswert an jedem kritischen Knoten (22) der kritischen Abgänge ($4_1$, $4_2$,..., $4_M$) aus der Spannung an einer Sammelschiene (8) und einer Spannungsanhebung oder einer Spannungsabsenkung ermittelt wird.

8.  Verfahren nach Anspruch 6 und 7, wobei

- die Messung der Spannung an der Sammelschiene (8) sowie eine Strommessung an jedem kritischen Abgang ($4_1$, $4_2$,..., $4_M$) mit in einer Einrichtung (16) zur Strommessung und mit einer Einrichtung (18) zur Spannungsmessung im Transformatorgehäuse (20) vorgenommen werden.

9. Verfahren nach einem der Ansprüche 5 - 7, wobei

- aus den Messdaten eine Scheinleistung des jeweils kritischen Abgangs ($4_1$, $4_2$,..., $4_M$) berechnet und an eine Überprüfungseinrichtung (24) übergeben werden, mit der die Einhaltung der Bandobergrenze ($B_O$) und der Banduntergrenze ($B_U$) überprüft wird.

10. Verfahren nach Anspruch 8, wobei

- bei einer Überschreitung der Bandobergrenze ($B_O$) oder bei Unterschreitung der Banduntergrenze ($B_U$) die Überprüfungseinrichtung (24) eine Einstellung der Stufen des Ortsnetztransformators (10) veranlasst.

11. Verfahren nach einem der Ansprüche 5 - 9, wobei

- eine Einstufung der Abgänge ($4_1$, $4_2$,..., $4_M$) als kritische Abgänge des Ortsnetzes (3) bezeichnet werden, wenn eine Leistungseinspeisung bzw. -entnahme, eine Länge einer Leitung oder Kabel des Abgangs ($4_1$, $4_2$,..., $4_M$) oder eine Impedanz von Leitung oder Kabel im jeweiligen Abgang ($4_1$, $4_2$,..., $4_M$) eine vordefinierte Schwelle überschreiten.

## Claims

1. An apparatus (1) for controlling the stability of a local distribution grid (3), with

- a plurality of outlets (4, $4_1$, $4_2$,..., $4_M$) wherein each outlet (4, $4_1$, $4_2$,..., $4_M$) comprises at least one consumer load (5) and/or at least one decentralized power generation plant (6);
- a busbar (8), which connects the outlets (4, $4_1$, $4_2$,..., $4_M$) with each other;
- a regulatable local distribution transformer (10), which is also connected with the busbar (8) via an electric line (11), by means of which a voltage measurement (12) for the local distribution grid (3) is provided;
- an on-load tap changer (14) for the adjustment of an output voltage of the local distribution transformer (10);
- wherein a device (16) for current measurement, which is connected with at least one of the plurality of outlets (4, $4_1$, $4_2$,..., $4_M$), and a device (18) for voltage measurement, which device (18) is connected with the busbar (8) are integrated in a transformer housing (20) **characterized in that**
- of the outlets (4, $4_1$, $4_2$,..., $4_M$), only critical outlets ($4_2$, $4_3$) are connected with the device (16) for current measurement.

2. The apparatus (1) according to the previous claims wherein

- an outlet (4, $4_1$, $4_2$,..., $4_M$) is rated as critical outlet if

  • a power infeed in the respective outlet exceeds a predefined first threshold, or
  • a power withdrawal in the respective outlet exceeds a predefined second threshold; or
  • a length of a line or of a cable of the respective outlet exceeds a predefined third threshold; or
  • an impedance of the line or the cable in the respective outlet ($4_2$, $4_3$) exceeds a predefined third threshold.

3. The apparatus (1) according to one of the previous claims wherein

- a verification device (24) is integrated with the device (16) for current measurement and with the device (18) for voltage measurement in the transformer housing (20), via which verification device (24) a compliance with a band upper limit ($B_O$) and with a band lower limit ($B_U$) is verifiable.

4. The apparatus according to one of the previous claims wherein

- the device (16) for current measurement, the device (18) for voltage measurement, and the verification device (24) form a voltage regulator (26), which is connected with the on-load tap changer (14) for the purpose of the adjustment of the taps of the local distribution transformer (10).

5. The apparatus according to claims 1 to 4, wherein

- The on-load tap-changer is built up according to the reactor type principle

6. A method for controlling the stability of a local distribution grid (3), comprising the steps:

- definition (32) of the critical outlets ($4_2$, $4_3$) of the local distribution grid (3);
- determination (30) of the equivalent impedance for each critical outlet ($4_2$, $4_3$) for the minimum node voltage in the local distribution grid (3);
- determination (31) of the equivalent impedance for each critical outlet ($4_2$, $4_3$) for the maximum node voltage in the local distribution grid (3);
- calculating the present current wherein the calculating is carried out for each of the critical outlets ($4_2$, $4_3$);
- calculating (34) a test voltage;
- verifying (35) a band upper limit ($B_O$) and a band lower limit ($B_U$) in dependence on a direction of an apparent power according to a consumer load current direction system (40);
- changing (36) the voltage in the local distribution grid (3) by an on-load tap changer (14) adapting a tap position at a local distribution transformer (10) so that the voltage in the local distribution grid (3) remains within the band upper limit ($B_O$) and the band lower limit ($B_U$).

7. The method according to claim 6, wherein

- a voltage value at each of the critical nodes (22) of the critical outlets ($4_2$, $4_3$) is determined from the voltage at a busbar (8) and from a voltage increase or a voltage reduction.

8. The method according to claim 6 and 7, wherein

- the voltage measurement at the busbar (8) as well as a current measurement at each critical outlet ($4_2$, $4_3$) are carried out in the transformer housing (20) by means of a device (16) for current measurement and by means of a device (18) for voltage measurement.

9. The method according to one of the claims 5-7 wherein

- an apparent power of the respectively critical outlet ($4_2$, $4_3$) is calculated from the measured data and transmitted to a verification device (24), by means of which the compliance with the band upper limit ($B_O$) and with the band lower limit ($B_U$) is verified.

10. The method according to claim 8, wherein

- on exceeding the band upper limit ($B_O$) or on falling below of the band lower limit ($B_U$), the verification device (24) causes an adjustment of the taps of the local distribution transformer (10).

11. The method according to one of the claims 5-9, wherein

- the outlets (4, $4_1$, $4_2$,..., $4_M$) are referred to as critical outlets ($4_2$, $4_3$) of the local distribution grid (3) if a power infeed or power withdrawal, respectively, a length of a line or of a cable of the respective outlet (4, $4_1$, $4_2$,..., $4_M$), or an impedance of line or cable in the respective outlet (4, $4_1$, $4_2$,..., $4_M$) exceed a predefined threshold.

**Revendications**

1. Dispositif (1) de commande de la stabilité d'un réseau local (3) comportant :

- un ensemble de sorties ($4_1$, $4_2$,...$4_M$), chaque sortie ($4_1$, $4_2$,...$4_M$) comprenant au moins un consommateur (5) et/ou au moins une installation de production d'énergie décentralisée (6),
- une barre omnibus (8) qui relie les sorties ($4_1$, $4_2$,...$4_M$) de l'ensemble de sorties ($4_1$, $4_2$,...$4_M$),
- un transformateur de réseau local réglable (10) qui est également relié à la barre omnibus (8) par l'intermédiaire d'une conduite électrique (11) avec laquelle il est prévu une mesure de tension (12) pour le réseau local (3), et

- un commutateur à gradins de charge (14) permettant de régler la tension de sortie du transformateur de réseau local (10),

- un dispositif (16) de mesure de courant qui est relié à au moins l'une des sorties ($4_1$, $4_2$,...$4_M$) de l'ensemble de sorties ($4_1$, $4_2$,...$4_M$), et un dispositif (18) de mesure de tension qui est relié à la barre omnibus (8) étant installés dans un boîtier de transformateur (20), **caractérisé en ce que**

- parmi l'ensemble de sorties ($4_1$, $4_2$,...$4_M$) seules sont reliées au dispositif (16) des sorties critiques pour la mesure du courant.

2. Dispositif (1) conforme à la revendication précédente,
   dans lequel :

   - une sortie ($4_1$, $4_2$,...$4_M$) est classée comme entrée critique lorsque :

     • l'alimentation en puissance de cette sortie dépasse un premier seuil prédéfini, ou
     • le prélèvement de puissance dans cette sortie dépasse un second seuil prédéfini, ou
     • la longueur de la conduite ou du câble de cette sortie dépasse un troisième seuil prédéfini, ou
     • l'impédance de la conduite ou du câble dans cette sortie dépasse un quatrième seuil prédéfini.

3. Dispositif conforme à l'une des revendications précédentes,
   dans lequel :
   dans le boîtier du transformateur (20) est installé un dispositif de contrôle (24) comprenant le dispositif (16) de mesure du courant et le dispositif (18) de mesure de la tension permettant de contrôler le maintien d'une limite de bande supérieure ($B_0$) et d'une limite de bande inférieure (Bu).

4. Dispositif conforme à l'une des revendications précédentes,
   dans lequel :
   le dispositif (16) de mesure du courant, le dispositif (18) de mesure de la tension et le dispositif de contrôle (24) forment un régulateur de tension (26) qui est relié, pour permettre de régler les gradins du transformateur de réseau local (10) au commutateur à gradins de charge (14) de ce transformateur de réseau local (10).

5. Dispositif conforme à l'une des revendications 1 à 4,
   dans lequel le commutateur à gradins de charge est réalisé selon le principe de commutation de réacteur.

6. Procédé de commande de la stabilité d'un réseau local (3) comprenant des étapes consistant à :

   - déterminer (32) les sorties critiques ($4_1$, $4_2$,...$4_M$) du réseau local (3),
   - évaluer (30) l'impédance équivalente de chaque sortie critique pour la tension de noeud minimum dans le réseau local à commander et à réguler (3),
   - évaluer (31) une impédance équivalente pour chaque sortie critique pour la tension de noeud maximum dans le réseau local (3) à commander et à réguler,
   - calculer l'intensité de courant actuelle pour chacune des sorties critiques ($4_1$, $4_2$,...$4_M$) du réseau local (3), le calcul étant effectué pour chacune des sorties critiques ($4_1$, $4_2$,...$4_M$) du réseau local (3),
   - calculer (34) une tension de contrôle,
   - contrôler (35) la limite de bande supérieure (Bo) et la limite de bande inférieure (Bu) en fonction du sens de la puissance apparente dans le système de flèche de référence du consommateur (40), et
   - modifier (36) la tension dans le réseau local (3) du fait qu'un commutateur à gradins de charge (14) adapte la position de gradin sur un transformateur de réseau local (10) pour que la tension dans le réseau local (3) reste entre la limite de bande supérieure (Bo) et la limite de bande inférieure (Bu).

7. Procédé conforme à la revendication 6,
   selon lequel la valeur de la tension sur chaque noeud critique (22) des sorties critiques ($4_1$, $4_2$,...$4_M$) est évaluée à partir de la tension sur une barre omnibus (8) et d'une augmentation de tension ou d'une chute de tension.

8. Procédé conforme à l'une des revendications 6 et 7,
   selon lequel :
   la mesure de la tension sur la barre omnibus (8) ainsi que la mesure du courant sur chaque sortie critique ($4_1$, $4_2$,...$4_M$) sont effectuées avec un dispositif (16) de mesure du courant et avec un dispositif (18) de mesure de la tension installés dans le boîtier de transformateur (20).

9. Procédé conforme à l'une des revendications 5 à 7,
selon lequel :
à partir des données de mesure on calcule la puissance apparente de chaque sortie critique ($4_1$, $4_2$,...$4_M$), et on la transmet à un dispositif de contrôle (24) permettant de contrôler le maintien de la limite de bande supérieure (Bo) et de la limite de bande inférieure (Bu).

10. Procédé conforme à la revendication 8,
selon lequel :
en cas de dépassement de la limite de bande supérieure (Bo) ou de passage au-dessous de la limite de bande inférieure (Bu) le dispositif de contrôle (24) permet un réglage des gradins du transformateur de réseau local (10).

11. Procédé conforme à l'une des revendications 5 à 9,
selon lequel le classement des sorties ($4_1$, $4_2$,...$4_M$) comme sorties critiques du réseau local (3) est caractérisé lorsque l'alimentation en puissance ou le prélèvement de puissance de la sortie, la longueur de la conduite ou du câble de la sortie ($4_1$, $4_2$,...$4_M$) ou l'impédance de la conduite ou du câble de la sortie ($4_1$, $4_2$,...$4_M$) dépasse un seuil prédéfini.

Fig. 1A

Fig. 1B

Fig. 2

**Fig. 3**

Bestimmen der kritischen
Abgänge eines Ortsnetzes    _32

Ermittlung von
$\underline{Z}_{eq}^{min}$    _30

Ermittlung von
$\underline{Z}_{eq}^{max}$    _31

Berechnen von I aus
33 — P und Q für jeden kritischen
Abgang

Berechnung von
34 — $u_2^{prüf}$

Überprüfen der Bandobergrenze
und der Banduntergrenze in
35 — Abhängigkeit von der Richtung der
Scheinleistung

36 — Verändern der
Spannung im Ortsnetz

Fig. 4

Q

■ $B_O$ Überprüfung        ■ $B_U$ Überprüfung

P

■ $B_O$ Überprüfung        ■ $B_U$ Überprüfung
                          ■ ($B_O$ Überprüfung)

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010018996 A1
- DE 102011108255 A1
- EP 2592709 A1
- WO 2011076887 A
- DE 102012202273 A1